# EUROPÄISCHE PATENTANMELDUNG

(11) **EP 1 788 473 A1**
(43) Veröffentlichungstag der Anmeldung: **23.05.2007**
(21) Anmeldenummer: 05025246.9
(22) Anmeldetag: 18.11.2005
(51) Int. Cl.: G06F 3/033

(54) **Eingabevorrichtung**

(71) Anmelder: SIEMENS AKTIENGESELLSCHAFT, 80333 München (DE)
(72) Erfinder: Bischoff, Toni Gerhard, 91580 Petersaurach (DE)

(57) **Zusammenfassung**

Erfindungsgemäß umfasst eine Eingabevorrichtung ein flexibles Anzeigemittel und eine dreidimensional sensitive Schicht zur Erfassung von Eingaben. Das Anzeigemittel der Eingabevorrichtung ist vorteilhafterweise sehr dünn, biegsam und energiesparend. Die dreidimensional sensitive Schicht wird als ein 3D-Touchpanel hinter dem Anzeigemittel eingebettet. Damit können Eingaben auf dem Anzeigemittel dreidimensional empfindlich erkannt und ausgeführt werden.

## Beschreibung

Die Erfindung betrifft eine Eingabevorrichtung zur Erfassung von Eingaben.

Bekannte Eingabevorrichtungen sind entweder zur Erfassung von digitalen Eingaben (z. B. Touchscreen (Berührungsbildschirm), Tastatur) oder zur Erfassung von analogen Eingaben (z. B. Steuerhebel, Maus). Für interaktive Erkundungen von 3D-Modellen (3D: dreidimensional) bzw. für Steuerungen von Prozessverläufen ist die Beschränkung auf eine der beiden Eingabearten unvorteilhaft. Es ist nicht benutzerfreundlich, mittels eines konventionellen Touchscreens, beispielsweise Geschwindigkeiten und Prozessverläufe zu beeinflussen oder ein Objekt in drei Dimensionen einzustellen.

Der Erfindung liegt die Aufgabe zugrunde, eine Eingabevorrichtung für digitale und analoge Eingaben zu realisieren.

Diese Aufgabe wird durch eine Eingabevorrichtung mit einem flexiblen Anzeigemittel und einer dreidimensional sensitiven Schicht zur Erfassung von Eingaben gelöst, wobei das Anzeigemittel vor der dreidimensional sensitiven Schicht angeordnet ist.

Der Erfindung liegt die Idee zugrunde, dass ein flexibles Anzeigemittel als Anzeige einer Eingabevorrichtung und eine dreidimensional sensitive Schicht als Touchpanel verwendet werden. Ein solches Touchpanel ist ein so genanntes 3D-Touchpanel, da es für dreidimensionale analoge Eingaben geeignet ist. Da eine dreidimensional sensitive Schicht üblicherweise undurchsichtig ist, wird das Anzeigemittel vor der dreidimensional sensitiven Schicht angeordnet. Somit verhält sich eine derartige Eingabevorrichtung wie ein Touchscreen, welcher auch für analoge Eingaben geeignet ist. Die Anzeigemöglichkeiten einer derartigen Eingabevorrichtung sind ohne großen Aufwand veränderbar, da sich das Anzeigemittel leicht austauschen lässt.

Gemäß einer vorteilhaften Ausgestaltung der Erfindung ist das Anzeigemittel ein Display, welches organische Leuchtdioden aufweist. Als Anzeigemittel finden organische Leuchtdioden, auch OLED (Organic Light-Emitting Diode) genannt, immer mehr Verwendung. Eine OLED-Anzeige besteht in der Regel aus biegsamem Material. Eine moderne OLED-Anzeige kann so dünn wie eine Plastik-Folie sein und dadurch eine entsprechend hohe Beweglichkeit bzw. Verformbarkeit aufweisen. Sie benötigt gegenüber Flüssigkristallbildschirmen (LCD: Liquid Crystal Display) deutlich weniger Energie, macht eine Hintergrundbeleuchtung überflüssig und weist einen großen Blickwinkelbereich und eine große Schaltgeschwindigkeit auf.

Um das taktile Feedback an einen Benutzer zu verbessern, ist die dreidimensional sensitive Schicht gemäß einer weiteren vorteilhaften Ausgestaltung der Erfindung verformbar. Eine solche Schicht besteht insbesondere aus einem weichen verformbaren Material (z. B. ähnlich hartem Schaumstoff), das sich nach Verformungen wieder in den Originalzustand zurücksetzen lässt bzw. von selbst zurücksetzt.

Gemäß einer weiteren vorteilhaften Ausgestaltung der Erfindung ist die dreidimensional sensitive Schicht elektrisch leitfähig, wobei die Leitfähigkeit der Schicht abhängig von einem auf die Schicht ausgeübten Druck ist. Das Material der Schicht ist somit elektrisch leitfähig, wobei seine Leitfähigkeit drucksensitiv änderbar ist. Bei Druck auf die dreidimensional sensitive Schicht entsteht an dieser Stelle eine leitfähige Verbindung.

Ähnlich wie bei konventionellen Touchscreens können hier sowohl Matrix- als auch Analog-Touchpanel verfügbar sein. Dadurch kann man nicht nur wie gewohnt grundrissorientierte 2D-Eingaben, sondern auch Eingaben in der dritten Dimension (durch einen Druck in Richtung Oberfläche des Panels) ermöglichen. Dies hat den Vorteil, dass man eine Geschwindigkeit oder einen Prozessverlauf steuern kann, d. h. analoge Eingaben vornehmen kann.

In der Regel werden die notwendigen Funktionstasten, Beschriftungen und Grafiken zuvor auf der OLED-Anzeige projiziert oder gedruckt. Die entsprechenden Konfigurationsdaten der Anzeige können ebenfalls ausgewertet und gespeichert werden. Damit können Eingaben auf der Anzeige der Eingabevorrichtung dreidimensional erkannt und dann ausgeführt werden.

Die Erfindung wird im Folgenden im Rahmen eines Ausführungsbeispiels anhand von Figuren näher dargestellt. Es zeigen:
FIG 1: eine OLED-Anzeige,
FIG 2: ein 3D-Touchpanel,
FIG 3: eine Eingabevorrichtung und
FIG 4: ein Verwendungsbeispiel der Eingabevorrichtung.

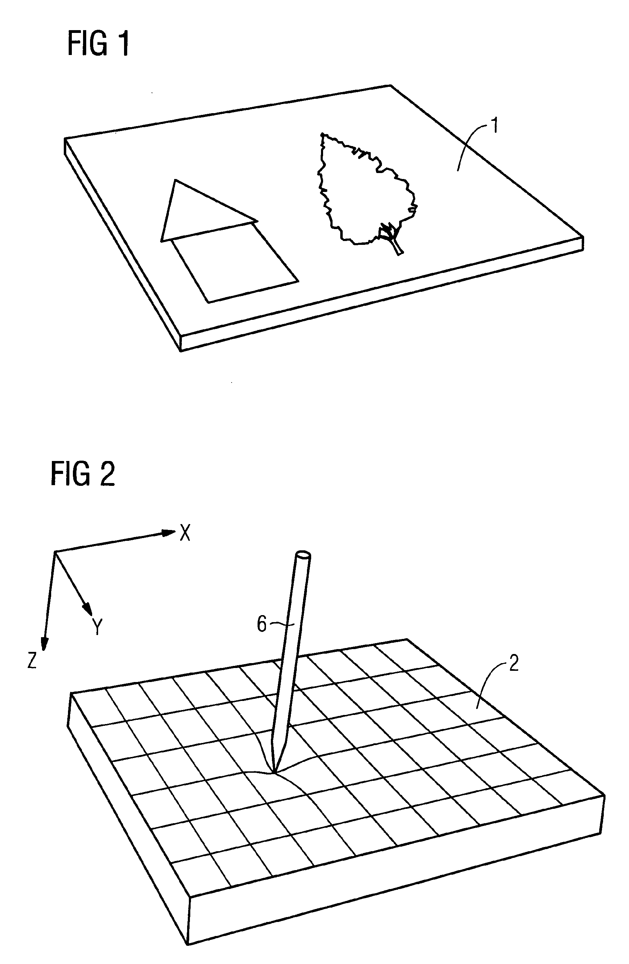

FIG 1 zeigt eine OLED-Anzeige 1, die aus einer Kohlenstoffschicht besteht und wie eine Plastik-Folie dünn und biegsam ist oder auf verschiedene Weise gefaltet werden kann. Sie ist normalerweise zwischen zwei Elektroden angeordnet. Diese Elektroden erzeugen das elektrische Feld für die Lichtemission.

Außerdem kann die Anzeige mittels einer Folie realisiert werden, worauf das Anzeigelayout durch Laser projiziert.

In FIG 2 wird ein 3D-Touchpanel 2 dargestellt, welches für 3D-Eingaben geeignet ist. Bei diesem Touchpanel werden in die Vorderschicht dünne Linien (Stromschienen) eingeätzt, so dass eine Anzahl Spalten und ebenfalls in horizontaler Richtung Reihen erzeugt werden, so dass es letztendlich ein Matrix-Touchpanel ist. Wenn man Druck auf das Touchpanel ausübt, z. B. mit dem Eingabestift 6, wird ein elektrischer Kontakt aufgenommen und zunächst in der Vorderschicht über eine Stromschiene in zwei Dimensionen ein Spannungsgefälle erzeugt, wobei der Widerstand bzw. die Kapazität des Touchpanels sich mit dem zunehmenden Druck ändert, was wiederum eine bestimmte Spannung hervorruft. Dies ist davon abhängig, wo auf der horizontalen Achse die Berührung erfolgt. Mit einem derartigen 3D-Touchpanel kann nicht nur die Position (X/Y-Dimensionen) auf dem 3D-Touchpanel, wo eine Eingabe ausgeführt ist, ermittelt werden, sondern auch die Stärke des Drucks die bei der Eingabe an der Position erfolgt, erkannt werden (Z-Dimension).

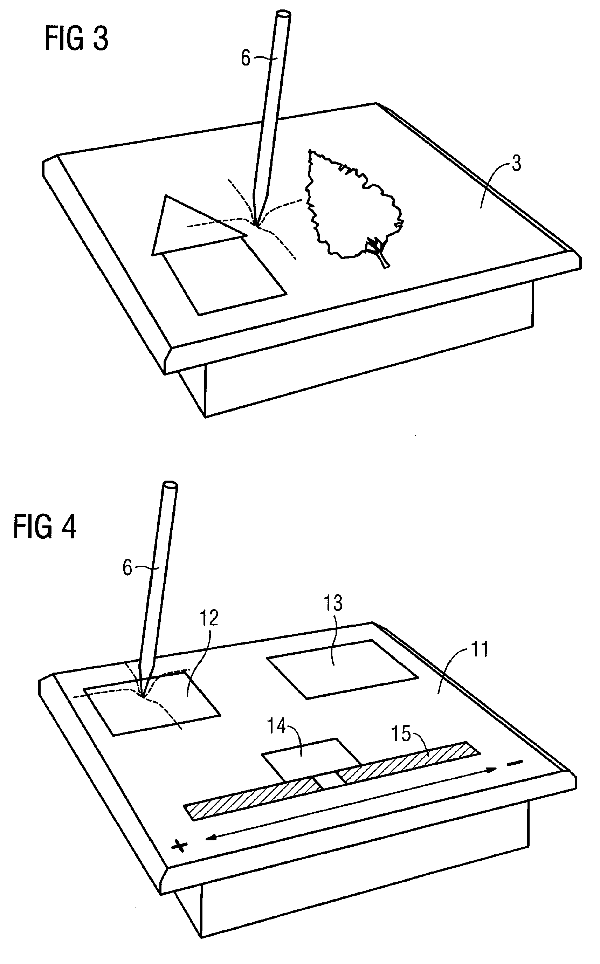

Da das 3D-Touchpanel undurchsichtig und eine OLED-Anzeige dünn und biegsam ist, wird die OLED-Anzeige vor das 3D-Touchpanel gelegt (FIG 3). Durch eine derart aufgebaute Eingabevorrichtung 3 kann die Bedienposition/Eingabeposition wie bei einem konventionellen Touchscreen und zusätzlich die Positionstiefe (Druckstärke) ermittelt werden. D. h. dies kann mit der entsprechenden Software zur Auslösung einer bestimmten Funktion führen. Dadurch ist das Touchscreen für 3D-Eingaben geeignet.

Darüber hinaus kann durch die Eingabevorrichtung eine digitale und eine analoge Funktion getrennt ausgewertet und gleichzeitig gesteuert werden, welche jeweils positionsorientierte Parameter bzw. die Positionstiefe betreffenden Parameter benutzen.

In FIG 4 wird eine Eingabevorrichtung als Verwendungsbeispiel angeführt, wobei mittels dieser Eingabevorrichtung ein Reiter 14 auf einer Achse 15 gesteuert werden kann. Auf der Anzeige 11 sind zwei Tasten 12, 13 sichtbar, die die Funktionen zur Verschiebung des Reiters 14 in jeweils zwei Richtungen zuordnen. Hier ist die Taste 12 für die Verschiebung in die Richtung "+" zuständig, während die Taste 13 für die Richtung "-" zuständig ist. Zusätzlich wird die Verschiebungsgeschwindigkeit des Reiters 14 durch die Druckstärke an den Tasten 12, 13 beeinflusst. Wenn ein Anwender einen Eingabestift 6 an die Taste 12 auf der Anzeige hält, wird der Reiter 14 sich in Richtung "+" verschieben. Mit einem Druck in Richtung Oberfläche der Anzeige (Z-Dimension) kann der Anwender dann die Verschiebung des Reiters 14 beschleunigen. Je stärker er auf die Taste 12 drückt, desto schneller verschiebt sich der Reiter 14. Bei der Steuerung werden beispielsweise digitale Informationen für die Bewegungsrichtung der Achse und analoge Informationen für die Geschwindigkeit der Achse gegeben.

Gleichzeitig kann eine perspektivische Simulation des Reiters 4 und der Achse 5 auf der Anzeige 1 grafisch demonstriert werden.

Zusammengefasst betrifft die Erfindung somit eine Eingabevorrichtung mit einem flexiblen Anzeigemittel und einer dreidimensional sensitiven Schicht zur Erfassung von Eingaben. Das Anzeigemittel der Eingabevorrichtung ist vorteilhafterweise sehr dünn, biegsam und energiesparend. Die dreidimensional sensitive Schicht wird als ein 3D-Touchpanel hinter dem Anzeigemittel eingebettet. Damit können Eingaben auf dem Anzeigemittel dreidimensional empfindlich erkannt und ausgeführt werden.

## Patentansprüche

1. Eingabevorrichtung, mit einem flexiblen Anzeigemittel und einer dreidimensional sensitiven Schicht zur Erfassung von Eingaben, wobei das Anzeigemittel vor der dreidimensional sensitiven Schicht angeordnet ist.

2. Eingabevorrichtung nach Anspruch 1,
**dadurch gekennzeichnet, dass**
das Anzeigemittel ein Display ist, welches organische Leuchtdioden aufweist.

3. Eingabevorrichtung nach Anspruch 1 oder 2,
**dadurch gekennzeichnet, dass**
die dreidimensional sensitive Schicht verformbar ist.

4. Eingabevorrichtung nach einem der Ansprüche 1 bis 3,
**dadurch gekennzeichnet, dass**
die dreidimensional sensitive Schicht elektrisch leitfähig ist, wobei die Leitfähigkeit der Schicht abhängig von einem auf die Schicht ausgeübten Druck ist.
